# EUROPÄISCHE PATENTSCHRIFT

(11) **EP 0 468 015 B1**
(45) Veröffentlichungstag und Bekanntmachung des Hinweises auf die Patenterteilung: **06.12.1995**
(21) Anmeldenummer: 91903359.7
(22) Anmeldetag: 08.02.1991
(51) Int. Cl.: H02K 3/16, H02K 3/34, H02K 17/42

(54) **NUTENBRÜCKEN-ASYNCHRONGENERATOR MIT KONSTANTER SPANNUNG**
CONSTANT VOLTAGE ASYNCHRONOUS GENERATOR WITH STATOR SLOT BRIDGES
GENERATEUR ASYNCHRONE A TENSION CONSTANTE AVEC PONTS SUR LES ENCOCHES DU STATOR

(30) Priorität: 09.02.1990 HU 73490
(43) Veröffentlichungstag der Anmeldung: 29.01.1992
(73) Patentinhaber: RAXER RAKODO- ES SZALLITOGEPELLATO KISSZOVETKEZET, H-1037 Budapest (HU)
(72) Erfinder: CSETVEI, Gyula, H-1034 Budapest (HU); KINCSES, István, H-1122 Budapest (HU)
(74) Vertreter: Beszédes, Stephan G., Dr.
(86) Internationale Anmeldenummer: HU9100007
(87) Internationale Veröffentlichungsnummer: WO9112647

(56) Entgegenhaltungen:
- DE-A- 1 488 673
- DE-A- 3 430 188
- DE-C- 0 058 011
- GB-A- 1 271 816

## Beschreibung

Die Erfindung betrifft einen Nutenbrücken-Asynchrongenerator mit konstanter Spannung zur Produktion von ein- oder mehrphasigem Wechselstrom in ein selbständiges Netz.

Zur Produktion von Wechselstromenergie werden Synchron- und Asynchron-Generatoren eingesetzt.

Die Synchron-Generatoren werden mit Bürsten, in letzter Zeit in steigendem Maße auch ohne Bürsten gefertigt. Bei beiden Ausführungen sind die Erregerpole die gewickelten Teile des Rotors. Die Konstanz der Ausgangsspannung wird durch eine elektrische Schaltung gewährleistet.

Asynchron-Generatoren sind eigentlich Asynchronmotoren mit kurzgeschlossenem Käfigrotor, die bei Antrieb oberhalb der Synchrondrehzahl Elektroenergie an ein vorhandenes Netz abgeben. Bei dieser Betriebsart nehmen sie die Blindenergie aus einem Netz auf.

Damit die Asynchron-Generatoren Energie in ein selbständiges Netz einspeisen können, sind Kondensatoren erforderlich, die die Selbsterregung und die für die Aufrechterhaltung des magnetischen Drehfeldes erforderliche Blindenergie liefern.

Die Größe dieser Kondensatoren ist im Laufe der technologischen Entwicklung sehr geschrumpft, wodurch die Wirtschaftlichkeit der Weiterentwicklung und Herstellung von Käfigasynchrongeneratoren mit Selbsterregung bedeutend anstieg.

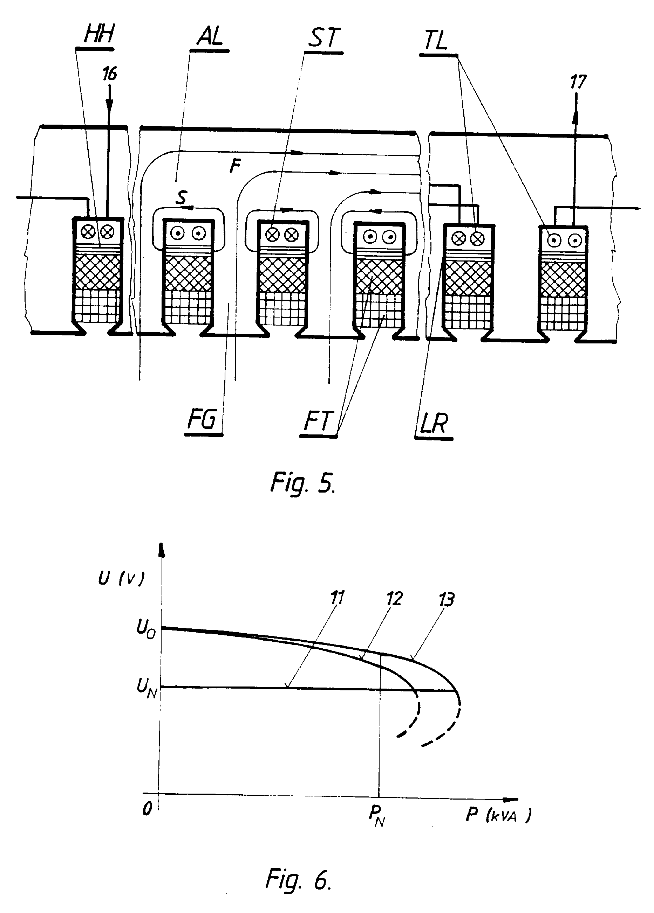

Die bisher bekannten Lösungen waren hauptsächlich auf die Verwendung völlig geschlossener Standardsynchronmotoren ausgerichtet. Diese Generatoren können bei konstanter Drehzahl, bei Nennleistung und einem cos von 0,8...1 im kalten beziehungsweise betriebswarmen Zustand die Nennausgangsspannung ±5 % gewährleisten. In Anbetracht dessen, daß die belastungsabhängige Drehzahländerung der angetriebenen Betriebsmaschine im allgemeinen bei ±3,5 % liegt, erreichen die Änderungen der Ausgangsspannung des Generators den Wert von ± 10 %. (Dies ist aus den Kurven 12 und 13 der weiter unten erläuterten Fig. 6 ersichtlich).

Um die Ausgangsspannung innerhalb engerer Grenzen zu halten, wurden verschiedene Lösungen ausgearbeitet.
- Vario, die Verwendung von Kondensatoren veränderlicher Kapazität;
- Sättigungsdrosselung: Verwendung einer von der Größe der Ausgangsspannung abhängenden Induktivität, die - abhängend von der Belastungsänderung - der Wirkung der an den Generator angeschlossenen Kondensatoren entgegengerichtet ist;
- Verwendung eines Drehzahlreglers an der Antriebsmaschine, der die Drehzahl abhängend vom Belastungsanstieg erhöht und dadurch das Absinken der Ausgangsspannung des Generators kompensiert;
- Generatoren mit Kranzwicklung.

Diese Lösungen haben in der Praxis keinen besonders breiten Eingang gefunden, denn sie sind nicht modern, nicht wirtschaftlich und machen die Asynchron-Generatoren nicht wettbewerbsfähig mit den Synchronmaschinen.

Die Vario-Kondensatoren werden wegen ihrer hohen Herstellungskosten nicht gefertigt; die Sättigungsdrossel verschlechtert wegen ihrer Maße und ihres Gewichtes das Gewicht-Leistungs-Verhältnis des Asynchrongenerators stark; der vom Belastungsanstieg abhängige Drehzahlregler ermöglicht es nicht, den durch schnelle, dynamische Belastungsschwankungen verursachten Spannungsschwankungen zu folgen.

Die Generatoren mit Kranzwicklung werden in offener Ausführung, mit einem technologisch komplizierten Verfahren hergestellt, da die Reglerwicklung in Form eines Toroiden um den Kranz des Stators herum angeordnet ist.

Ferner ist aus der DE-A-34 30 188 ein Asynchrongenerator mit konstanter Spannung, in Ein- oder Dreiphasenausführung bekannt. Dieser Asynchrongenerator ist so gestaltet, daß in den Nuten des Ständers neben den Hauptwicklungen auch die Regulierwicklung angeordnet ist und zur inneren Anzapfung der Hauptwicklungen des Generators über Klemmen ein Spannungsregler angeschlossen ist.

Aufgabe der Erfindung war der Bau eines an ein selbständiges Netz produzierenden, robusten, völlig geschlossenen Asynchrongenerators ohne Bürsten, der ähnlich wie der Synchrongenerator im Stande ist, eine von der Belastungsänderung unabhängige, konstante Ausgangsspannung entsprechender Sinusform zu gewährleisten.

Gegenstand der Erfindung ist ein Nutenbrücken-Asynchrongenerator mit konstanter Spannung, in Ein- oder Dreiphasenausführung, bei welchem in den Nuten des Ständers des Generators aus Platten gefertigte Nutenbrücken mit minimalem Luftspalt angeordnet sind, in den Nuten des Ständers neben der (den) Hauptwicklung(en) auch die Regulierwicklung angeordnet und zur inneren Anzapfung der Hauptwicklung(en) des Generators über Klemmen ein Spannungsregler angeschlossen ist.

Von der DE-A-34 30 188 unterscheidet sich der Gegenstand der Erfindung dadurch, daß in den Nuten des Ständers des Generators aus Platten gefertigte Nutenbrücken mit minimalem Luftspalt angeordnet sind.

Durch den elektronischen Spannungsregler der Generatoren mit Käfigrotor müssen die dynamischen Belastungsänderungen innerhalb einiger Perioden abregelbar sein. Die Regelleistung und damit auch der Regelstrom müssen gering sein, damit der Spannungsregler so klein wie möglich gehalten werden kann.

Das Wesen der Erfindung besteht darin, daß in den Nuten (Schlitzen) des Ständers (Stators) des Generators Platten angeordnet sind, die für die magnetischen Kraftlinien zwischen den beiden Zähnen "Brücken" bilden.

Der erfindungsgemäße Nutenbrücken-Generator entstand unter Verwendung des Plattenpaketes des Standardasynchronmotors. Im Klemmenhaus des Generators befinden sich der an die Ausgangsklemmen angeschlossene elektronische Spannungsregler und die Kondensatorbatterie. Neben der klassischen ein- beziehungsweise dreiphasigen Hauptwicklung ist in den Nuten des Ständers auch die Regulierwicklung angeordnet.

Die Erfindung wird an Hand von Abbildungen näher erläutert.
- Fig. 1: zeigt den Anschluß der Wicklungen eines einphasigen Käfiggenerators, in
- Fig. 2: ist das Gleiche für einen dreiphasigen Generator dargestellt,
- Fig. 3: zeigt das Schema des elektronischen Spannungsreglers, in
- Fig. 4: ist die Anordnung der Wicklungen des bekannten Käfiggenerators mit Kranzwicklung dargestellt,
- Fig. 5: zeigt die Hauptwicklung des erfindungsgemäßen Nutenbrücken-Asynchronmotors mit konstanter Spannung im Schnitt, ferner die den Kranz umgebende Regulierwicklung, in
- Fig. 6: schließlich ist die äußere Kennlinie eines Asynchronmotors mit Selbsterregung im Vergleich mit der äußeren Kennlinie des erfindungsgemäßen Nutenbrücken-Asynchrongenerators mit konstanter Spannung gezeigt.

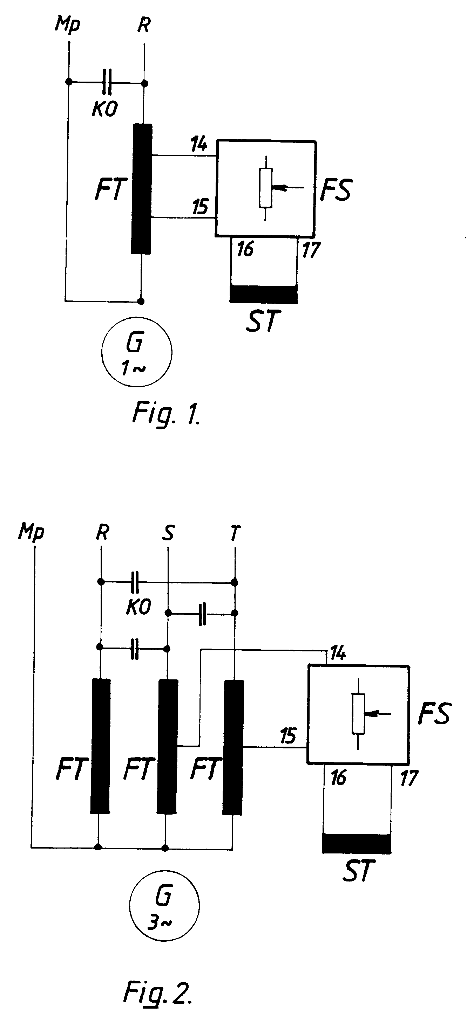

Die Fig. 1 und 2 zeigen die üblichen Schaltschemen für einen ein- beziehungsweise einen dreiphasigen Käfiggenerator, wobei FT die Hauptwicklung und ST die Regulierwicklung bezeichnet.

Der Spannungsregler FS ist zwecks innerer Anzapfung der Hauptwicklung(en) FT des Generators über die Klemmen 14 und 15 angeschlosen. Die Klemmen 16 und 17 des Spannungsreglers FS sind mit der Regulierwicklung ST verbunden.

Aus Fig. 2 ist ersichtlich, daß die Hauptwicklungen sterngeschaltet sind.

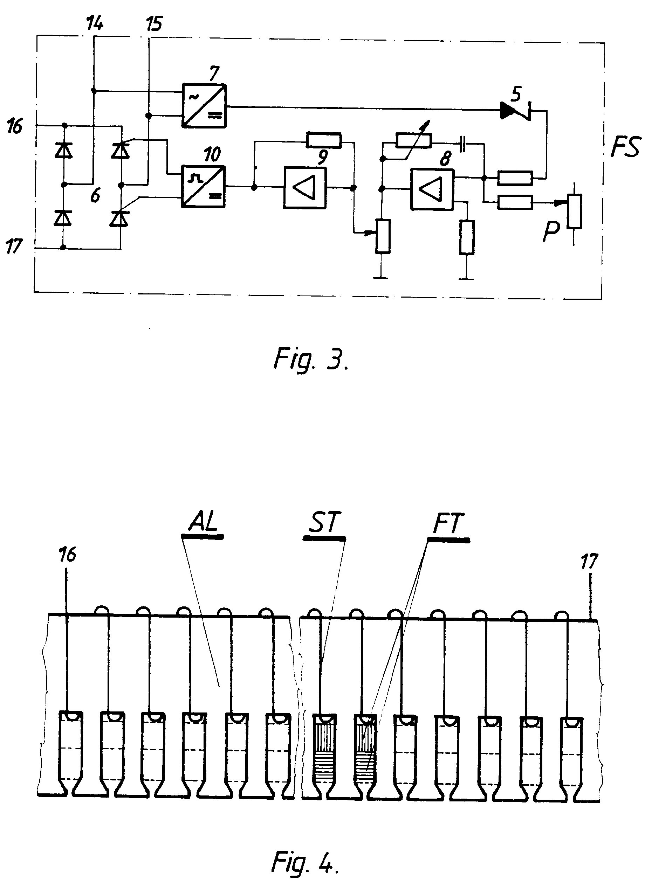

Fig 3 zeigt eine mögliche Lösung für den Spannungsregler FS. Der Spannungsregler FS besteht aus einer eine halb gesteuerte Thyristorbrücke enthaltenden Ausgangsstufe 6, einem mit den Klemmen 14 und 15 der Hauptwicklung FT verbundenen Gleich/Wechselspannungs-Wandler 7, einer Zener-Diode 5, einem zur Einstellung des gewünschten Wertes dienendes Potentiometer P, einem Verstärker 8, einem Signalumkehrer 9 und einem Impulssignalformer 10.

Der in Fig. 3 dargestellte elektronische Spannungsregler funktioniert folgendermaßen: die Ausgangsspannung des Generators wird von dem Gleich/Wechselspannungs-Wandler 7 überwacht. Das Ausgangssignal des Wandlers 7 gelangt über die Zener-Diode 5 auf den Eingang des Verstärkers 8. Der Verstärker 8 vergleicht das über die Zener-Diode 5 ankommende Meßsignal mit dem am Potentiometer P eingestellten Referenzsignal. Das Ausgangssignal des Verstärkers 8 gelangt über den Signalumkehrer 9 auf den Impulssignalformer 10, der die aus der halb gesteuerten Thyristorbrücke bestehende Ausgangsstufe 6 und damit über die Klemmen 16 und 17 die auf die Regulierwicklung ST gelangende Spannung in dem gewünschten Maße regelt.

Fig. 4 zeigt die Anordnung der Wicklungen des bekannten Käfiggenerators mit Kranzwicklung. In den Nuten des Ständers AL sind die Regulierwicklung ST und die Hauptwicklung(en) FT angeordnet. Die Regulierwicklung ST wird über die Klemmen 16 und 17 gespeist.

Der erfindungsgemäße Nutenbrücken-Asynchronmotor mit konstanter Spannung wird an Hand der Fig. 5 erläutert. Das Wesen der Erfindung besteht in der Anordnung der Regulierwicklung ST und in den in jeder Nut angeordneten, den Magnetfluß leitenden Nutenbrücken HH.

Die Anzahl der die Regulierwicklung ST bildenden Wicklungsfüße TL ist gleich der Anzahl der Zähne FG des Ständers AL, denn die Wicklungen sind zwischen den Zähnen angeordnet.

Die aus Blechplatten angefertigten Nutenbrücken HH sind in den Nuten mit einem minimalen Luftspalt LR angeordnet.

Beim Einbau der Wicklungen des erfindungsgemäßen Nutenbrücken-Asynchrongenerators konstanter Spannung wird zuerst die Regulierwicklung ST eingesetzt, und nach dem Einlegen der aus Blech gefertigten Nutenbrücken HH wird die aus zwei Schichten bestehende Hauptwicklung FT angebracht.

Der erfindungsgemäße Asynchrongenerator gemäß Fig. 5 arbeitet folgendermaßen.

Die Regulierwicklung ST wird über die Klemmen 16 und 17 mit Gleichstrom gespeist, dadurch entsteht neben dem Hauptfluß _{F} in den Zähnen FG ein Regulierungsfluß ₛ, der den magnetischen Widerstand des magnetischen Drehfeldes erhöht, und dadurch wird die induzierte elektromotorische Kraft beziehungsweise die Ausgangsspannung geringer.

Mit den Änderungen der Intensität des Gleichstromes werden die Zähne FG unterschiedlich vormagnetisiert, und durch die auf diese Weise verursachte veränderliche Sättigung wird auch der magnetische Widerstand des Hauptflusses _{F} des erfindungsgemäßen Generators veränderlich. Dies zeigt sich letztlich in den Änderungen der Ausgangsspannung.

Die zum Regeln gebrauchte Leistung beträgt weniger als 5 % der Nennleistung des Generators. Dies ist dem Umstand zu verdanken, daß der Magnetkreis der Regulierwicklung ST einen minimalen Luftspalt LR enthält; auf diese Weise sind zur Herstellung des Regulierungsflusses ₛ und zur Magnetisierung der Zähne FG bis zur Sättigung bereits wenige Amperewindungen ausreichend.

Die Wicklungsfüße TL sind sinngemäß so geschaltet, daß der durch sie erregte Regulierungsfluß ₛ die Zähne des Ständers sättigt. Die in jeder Nut mit einem minimalen Luftspalt LR angeordneten Nutenbrücken HH gewähr leisten den Abschluß von ₛ.

Durch Veränderung des Wertes des Erregergleichstromes ist es also möglich, die Ausgangsspannung innerhalb eines weiten Bereiches zu ändern. Mit dem Anstieg des Stromes wird die Spannung geringer, mit dem Absinken des Stromes wächst sie an. Die Wellenform der an der Regulierwicklung erscheinenden Gleichspannung und des Stromes haben keinen Einfluß auf die Wellenform der Ausgangsspannung.

In Fig. 6 ist die äußere Kennlinie eines Asynchrongenerators mit Selbsterregung im Vergleich mit der äusseren Kennlinie des erfindungsgemäßen NutenbrückenAsynchrongenerators gezeigt. Die Kurven zeigen die Änderung der Ausgangsspannung U (V) der Generatoren als Funktion der Belastung P (kVA). Die Kurve 12 betrifft eine induktive Belastung mit cos = 0,8, die Kurve 13 eine Ohmsche Belastung mit cos = 1.

Aus den Kurven 12 und 13 kann abgelesen werden, daß die Ausgangsspannung des keinen Spannungsregler und keine Nutenbrücken aufweisenden Asynchrongenerators mit Selbsterregung im Leerlauf am größten ist (Uₒ), mit dem Anstieg von P ständig geringer wird und nach der größten abgegebenen Leistung steil nach Null abfällt; der Kurzschlußzustand ist eingetreten.

Die erfindungsgemäße Lösung, d.h. die Anwendung der Regulierwicklung ST, der Nutenbrücken HH und des Spannungsreglers FS führen zu der in der Kurve 11 dargestellten Kennlinie. Mit dem Anstieg der Belastung P muß der Erregerstrom um so viel verringert werden, daß die Ausgangsspannung immer auf dem gewünschten Wert U_{N} bleibt.

Die tatsächliche äußere Kennlinie des erfindungsgemäß mit Nutenbrücken ausgerüsteten Asynchrongenerators, die in Fig. 6 abgebildete Kurve ist ganz bis zur größten abgegebenen Leistung gerade.

Der erfindungsgemäße Nutenbrücken-Asynchrongenerator mit konstanter Spannung ist eine Maschine mit Kurzschlußläufer, d.h. sie weist keine gleitenden, dem Verschleiß unterliegenden Teile auf, ihre mechanische Lebensdauer wird ausschließlich von den Kugellagern bestimmt. Die Wicklungen sind keiner kritischen Überhitzung ausgesetzt, weil der Generator sowohl bei Überlastung wie auch im kurzgeschlossenen Zustand abgeregt wird, seine Spannung und sein Strom sinken auf Null.

Der Nutenbrücken-Asynchrongenerator produziert weder konduktive noch konvektive Störungen auf Radiofrequenz. Er ist auch unter den extremsten Klimabedingungen und in explosionsgefährdeter Umgebung geeignet, Verbraucher mit besonderen Ansprüchen - zum Beispiel die Antriebssysteme in der Schiffahrt, im Bergbau usw. - mit elektrischer Energie zu versorgen.

## Patentansprüche

1. Nutenbrücken-Asynchrongenerator mit konstanter Spannung, in Ein- oder Dreiphasenausführung, bei welchem in den Nuten des Ständers (AL) des Generators aus Platten gefertigte Nutenbrücken (HH) mit minimalem Luftspalt (LR) angeordnet sind, in den Nuten des Ständers (AL) neben der (den) Hauptwicklung(en) (FT) auch die Regulierwicklung (ST) angeordnet und zur inneren Anzapfung der Hauptwicklung(en) (FT) des Generators über Klemmen (14, 15) ein Spannungsregler (FS) angeschlossen ist.

2. Asynchrongenerator nach Anspruch 1, bei welchem die Anzahl der die Regulierwicklung (ST) bildenden Wicklungsfüße (TL) mit der Anzahl der Zähne (FG) des Ständers (AL) übereinstimmt.

3. Asynchrongenerator nach Anspruch 1 oder 2, bei welchem die Reihenfolge des Einbaus der Wicklungen folgende ist: Anbringen der Regulierwicklung (ST) auf dem Grunde der Nuten, darauf folgen die aus Platten gefertigten Nutenbrücken (HH) und auf diese die zweischichtige(n) Hauptwicklung(en) (FT).

4. Asynchrongenerator nach einem der Ansprüche 1-3, bei welchem die Regulierwicklung (ST) durch Anzapfen der einbeziehungsweise dreiphasigen Hauptwicklung (FT) über Klemmen (14, 15) unter Zwischenschaltung eines Spannungsreglers (FS) gespeist wird.

## Claims

1. Constant voltage asynchronous generator slot bridges in one- or three-phase implementation in which in the slots of the stator (AL) slot bridges (HH) made of plates are arranged with minimum air gap (LR), in the slots of the stator (AL) next to the main winding(s) (FT) also the regulator winding (ST) is arranged anda voltage regulator (FS) is connected by the terminals (14, 15) for the inner tapping of the main winding(s) (FT) of the generator.

2. Asynchronous generator according to claim 1 in which the number of coil legs (TL) forming the regulator winding (ST) is equivalent to that of teeth (FG) of the stator (AL).

3. Asynchronous generator according to claim 1 or 2 in which the installation sequence of the windings is as follows: The regulator winding (ST) has to be arranged in the bottom of the slots, followed by slot bridges made of plates (HH) and thereafter the double-layer main winding(s) (FT).

4. Asynchronous generator according to claims 1 - 3, in which the regulator winding (ST) is supplied by tapping the one- or three-phase main winding (FT) through the terminals (14, 15) with the insertion of the voltage regulator (FS).

## Revendications

1. Générateur asynchrone à ponts de rainure présentant une tension constante, en version mono et triphasé, dans lequel sont disposés dans les rainures du bâti (AL) du générateur des ponts de rainure fabriqués en plaques (HH) avec un entrefer (LR) minimal, dans les rainures du bâti (AL) étant disposés à côté de l'enroulement/les enroulements principal/principaux (FT) également l'enroulement de régulation (ST) et pour la prise intérieure de l'enroulement/des enroulements principal/principaux (FT) du générateur par l'intermédiaire de bornes (14, 15) un régulateur de tension (FS) est raccordé.

2. Générateur asynchrone selon la revendication 1, dans lequel le nombre des pieds d'enroulement (TL) formant l'enroulement de régulation (ST) concorde avec le nombre des dents (FG) du bâti (AL).

3. Générateur asynchrone selon les revendications 1 ou 2, dans lequel l'ordre chronologique du montage des enroulements est le suivant :
montage de l'enroulement de régulation (ST) sur le fond des rainures suivi par les ponts de rainure fabriqués en plaques (HH) et sur celles-ci l'enroulement/les enroulements principal/principaux en deux couches (FT).

4. Générateur asynchrone selon l'une quelconque des revendications 1 à 3, dans lequel l'enroulement de régulation (ST) est alimenté par la prise de l'enroulement principal (FT) monophasé ou triphasé moyennant des bornes (14, 15) un régulateur de tension (FS) étant intercalé.
